# EUROPEAN PATENT SPECIFICATION

(11) **EP 2 894 891 B1**
(45) Date of publication and mention of the grant of the patent: **26.10.2016**
(21) Application number: 14199297.4
(22) Date of filing: 19.12.2014
(51) Int. Cl.: H04W 12/06, H04L 29/06

(54) **Mobile token**
Mobiles Token
Jeton mobile

(30) Priority: 20.12.2013 US 201361919230 P
(43) Date of publication of application: 15.07.2015
(73) Proprietor: Verisec AB, 131 02 Nacka (SE)
(72) Inventor: Nesic, Dragoljub, 113 49 Stockholm (SE)
(74) Representative: Groth & Co. KB

(56) References cited:
- WO-A1-2010/101476
- US-A1- 2011 197 266
- US-A1- 2012 240 204

## Description

### Field of invention

The present invention relates to a method for establishing a shared secret between a first and a second device without any shared trust between the first and second device, for the use of services provided by a service provider to a user of said second device.

The present invention also relates to a system adapted to establish a shared secret according to the inventive method.

The present invention also relates to computer program products through which the inventive methods can be realised and a computer readable medium carrying an inventive computer program product.

### Description of background art

It is known to use two factor authentication and one time passwords to protect access services provided by service providers in a safe manner, where users usually use fixed passwords, often selected so that they are easy to remember.

Service providers, web- or cloud applications and corporate networks require an open standard based system which will not lock them into working with a proprietary technology and vendor, but provides a wide variety of authentication devices, both hardware and software based, mobile authenticators, SMS OTP and more.

Users are increasingly accessing applications running in the cloud and providers want to stay in control of authentication to those applications.

Joiners need to be provisioned with user accounts and passwords to cloud applications, and leavers need to be cut off from accessing those same applications.

It can also be mentioned that there is a known algorithm for challenge-response authentication developed by the Initiative for Open Authentication (OATH) called OCRA: OATH Challenge-Response Algorithm.

Patent publication US 2011/0197266 A1 shows that methods and systems for secure user authentication using a OTP involve, for example, pre-storing a OTP application on a first computing device for generating a valid OTP value for the user responsive to receiving entry of a valid PIN value of the user, no part of the valid PIN value is stored on the first computing device and pre-storing on a back-end server the valid PIN value and a valid shared secret for the user. Upon receiving entry of a purported PIN value of the user, a purported shared secret is dynamically synthesized on the first computing device by the OTP application based on the purported PIN value of the user and a purported OTP value is generated on the first computing device. When entry of the purported OTP value is received by the back-end server in an attempt to log on the back-end server from a second computing device, the back-end server cryptographically calculates a window of OTP values, and log on to the back-end server from the second computing device is allowed if the calculated window of OTP values corresponds to the received OTP value.

### Summary of the present invention

### Problems

The use two factor authentication and one time passwords with fixed passwords is a problem because these passwords can easily be hacked and because they are a nightmare for users to remember; and therefore users choose easily remembered passwords which are inherently weak. Users also tend to reuse the same passwords across multiple applications, therefore if security to one application is hacked; security can be compromised in many other places as well.

It is a problem to manage user access; it needs to take place in one location and under corporate governance policies. It is a problem that users can have access to corporate secrets in multiple cloud applications just because someone has forgotten to remove their user accounts from those systems.

It is thus a problem to achieve a user-friendly, Web Single-Sign On experience for users so that once logged in they can move between multiple web applications through the same browser session without having to log in again and again.

It is also a problem to share services with partners and suppliers and to set up Identity federation with a simple configuration setting to allow authenticated users to seamlessly access partners' applications and partners to be able to access theirs.

It is a problem to leverage the true potential of a mobile device in the field. A service provider wants their users to be able to authenticate and sign transactions on their mobile devices in a secure way. They require separate channel authentication and transaction signing to avoid threats like man-in-the browser (MIB), man-in-the middle (MIM) and phishing attacks.

To do this they will need a system that can provision mobile devices with secret keys for authentication and signing. They will need to set up an encrypted SSL session with the device, retrieve unique information about the end point to avoid the threat of device cloning and they will want to ensure that PIN verification, key generation, signature time stamping and other actions are done server side, thereby reducing dependency on the security environment of the mobile device itself.

It is also a problem to create a more efficient workflow by pushing predictable transactions out to users' mobile devices for signing, rather than depend on the users actively logging in to an application to perform these activities.

The traditional, limited approach to identity management is simply not enough in the interconnected world of today. It is a problem that fixed passwords are no longer secure enough to protect valuable assets and information. Organisations in both the corporate and public sector need a secure authentication solution that allows an unlimited number of users, applications and devices at a fixed cost. The solution also has to be non-intrusive so that it can be integrated without complex integrations with existing systems.

Over and above the online identification and transaction space related to individuals accessing financial and other services, the exponential growth of network connected devices presents another problem area. The identity of such connected devices as well as the integrity of the applications executing on them, and the ability of these devices to commit transactions on their own or on behalf of an individual or organisation presents a problem similar to that described above - current systems typically rely on some kind of password stored on such devices and repeatedly used to authenticate the device or confirm transactions with a service provider.

Systems in which, for example, a "smart fridge" needs to communicate with an automated replenishing service, a "smart vehicle" needs to communicate with a surveillance or repair service, or a speed camera needs to communicate with a traffic monitoring system all have the requirement to securely identify the device as well as for the said device to be able to commit transactions with an network connected service provider.

Similar to the mobile phones mentioned above, it is a problem to provisioning such devices with secret keys for authentication, i.e. assuring the identity of a device when connecting to an online service, and signing, i.e. securely committing transactions with an online service provider, particularly in the light of the large numbers of such devices. Excluding computing platforms a typical household today may have a handful of devices that require online access - however the number of devices that will more or less permanently be connected to a network is growing by the day requires a method that is simpler and much more secure than storing a static password on the device.

### Solution

With the purpose of solving one or more of the above mentioned problems, and from the standpoint of a method for establishing a shared secret between a first and a second device without any shared trust between the first and second device, for the use of services provided by a service provider to a user of the second device, the present invention teaches a method where:
a) a user of the second device is identified by the service provider,
b) the second device is requesting and receiving an activation code from the first device,
c) the user of the second device is sending the activation code to the service provider,
d) the service provider is sending the activation code to the first device,
e) the first device is confirming the activation code and is generating and storing the shared secret,
f) the first device is generating a reference to the shared secret and transferring the reference and shared secret to the second device,
g) the first device is transferring the reference to the service provider, and
h) the service provider is storing the reference and associating the reference to the user.

It is proposed that the user is identified by the service provider through a previously established relation, which, as an example, can be through an out of the band method, such as a personal visit or a registered mail.

Unique randomly generated or hardware specific information may be included in the request of activation code, which information can be used to protect the transfer of the shared secret.

It is proposed that the request includes user selected information known by the user, such as a PIN-code, where the user selected information is available for detecting unauthorized use of the shared secret.

For the purpose of preventing unauthorized use of the second device due to loss, theft etc., it is proposed that the user selected information is stored in the first device, thus not being available locally in second device.

The present invention teaches that the first and second device mutually validate the shared secret before the transferring of the reference to the service provider.

It is proposed that the second device initiates a periodical poll of the first device for the shared secret following step b), which poll is terminated at the closing of step f).

It is also proposed that the service provider initiates a periodical poll of the first device for the reference following step d), which poll is terminated at the closing of step g).

With the purpose of providing scalability the present invention teaches that the first device can establish a shared secret with more than one second device, that the second device can establish a shared secret with more than one first device, and that the first device can provide the use of established shared secrets to more than one service provider.

It should be understood that the first device and the service provider can be two separate physical units or two separate logical units in one and the same physical unit.

The present invention also relates to a system adapted to establish a shared secret between a first and a second device without any shared trust between said first and second device, for the use of services provided by a service provider to a user of the second device. The present invention specifically teaches that,
a) the second device is adapted to enable a user to be identified by the service provider,
b) the second device is adapted to request and receive an activation code from the first device,
c) the service provider being adapted to receive the activation code from the user of the second device,
d) the service provider being adapted to send the activation code to the first device,
e) the first device being adapted to confirm the activation code and generate and store the shared secret,
f) the first device being adapted to generate a reference to the shared secret and to transfer the reference and shared secret to the second device,
g) the first device being adapted to transfer the reference to the service provider, and
h) the service provider being adapted to store the reference and to associate the reference to the user.

The service provider can be adapted to identify the user through a previously established relation or through an out of the band method, such as a personal visit or a registered mail.

The second device can be adapted to include randomly generated or unique hardware specific information in the request of activation code, and the first device can be adapted to use this information to protect the transfer of the shared secret.

It is proposed that the second device is adapted to include user selected information known by the user in the request, where the user selected information is available to the first device for detecting unauthorized use of the shared secret.

In order to prevent unauthorized use of the second device, such as in the case of loss, theft etc., it is proposed that the first device is adapted to store the user selected information so that the user selected information is not available locally in second device.

The present invention teaches that the first and second device can be adapted to mutually validate the shared secret before the transferring of the reference to the service provider.

It is proposed that following step b) the second device is adapted to initiate a periodical poll of the first device for the shared secret, which poll is terminated at the closing of step f).

It is also proposed that following step d) the service provider is adapted to initiate a periodical poll of the first device for the reference, which poll is terminated at the closing of step g).

In order to enable scalability it is proposed that the first device is adapted to establish a shared secret with more than one second device, that the second device is adapted to establish a shared secret with more than one first device, and that the first device is adapted to provide the use of established shared secrets to more than one service provider.

The first device and the service provider can be two separate physical units or two separate logical units in one and the same physical unit.

The present invention also relates to a computer program product comprising computer program code, which, when executed by a device, enables the device to perform the steps of a first device according to the inventive method.

The present invention also relates to a computer program product comprising computer program code, which, when executed by a device, enables the device to perform the steps of a second device according to the inventive method.

The present invention also relates to a computer program product comprising computer program code, which, when executed by a device, enables the device to perform the steps of a service provider according to the inventive method.

The present invention also relates to a computer readable medium carrying computer program code according to any one of the inventive computer program products.

### Advantages

The advantages of the present invention is that it provides a family of products in the areas of user authentication, credential provisioning, cloud IDP (Identity Provider), Web SSO and mobile transaction signing, and these products can easily be implemented as an authentication and transaction signing app for different devices such as iOS and Android devices.

Except for the mobile applications the invention can be implemented as physical or virtual appliances built on a common development platform, for example with a hardened Linux based operating system. The invention provides products that are easy to use, deploy and maintain, outperforming the competition and providing next generation technology at a very competitive price point.

While the authentication appliance typically resides behind a firewall, the other appliances are cloud facing. To ease deployment and reduce sales cycle these appliances can be deployed in one "mulipliance" server, meaning that the relevant appliance can be switched on with license switches as and when the customer requires them.

In a workflow requiring multiple authorisations, e.g. large transaction value in Treasury and Merchant banking, the present invention could be used to push authorisation requests sequentially to the different managers' mobile devices, thereby dramatically reducing transaction time and administrative overhead.

The present invention provides a next generation strong authentication server managing secure access to corporate networks. It is based on a unique pricing model where the costs are independent of the number of users, enabling customers to take an unlimited approach including all employees, partners and customers in the system, connecting them to any application using a wide range of devices.

### Brief description of the drawings

A method, device and computer program product according to the present invention will now be described in detail with reference to the accompanying drawings, in which:
- Figure 1: is schematic and simplified illustration showing the provisioning of a shared secret,
- Figure 2: is a sequence diagram explaining the protocol made by the interactions between a mobile token application, a provisioning server and a bank online application,
- Figure 3: is a state diagram showing the states that a provisioning server goes through when handling a token provisioning,
- Figure 4: is a state diagram showing the states that a mobile token goes through when handling a token provisioning,
- Figure 5: is a schematic and simplified illustration of the use of a shared secret in a transaction process, and
- Figure 6: is a sequence diagram that explains the protocol made by the interactions between the mobile token application 2', the mobile application server 1' and the bank online application 3

### Description of embodiments as presently preferred

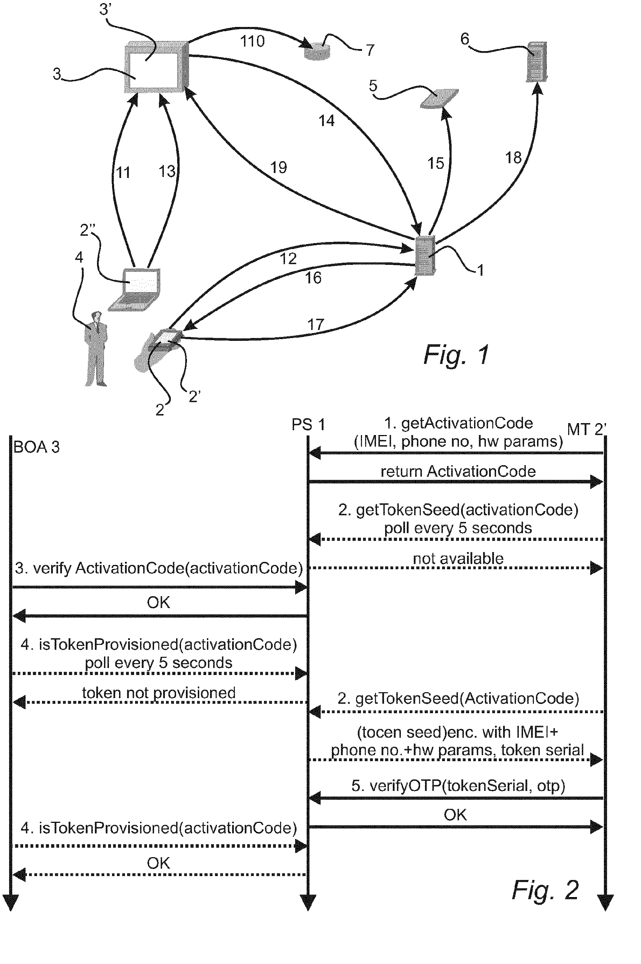

The present invention will now be described with reference to figure 1 showing the provisioning of a shared secret, which in the description will be called a mobile token. The section 'Use cases' deals with the procedure from an end user's point of view, while 'System overview' gives an in-depth technical description.

In the following exemplifying embodiments the first device 1 is exemplified by a provisioning server 1 and a transaction server 1', and the second device 2 is exemplified by a mobile device 2 with a mobile token application 2'. The service provider 3 is exemplified by a bank online application 3, which can be accessed by means of a personal computer 2". A user 4 can access the bank online application 3 through the personal computer 2" and the mobile token application 2' through the mobile device 2. It should be understood that the personal computer 2" can be any kind of computing device available to the user 4 and that the mobile device 2 can be any kind of mobile device available to the user 4. It should also be understood that the personal computer 2" and the mobile device 2 can be one and the same device where the bank online application 3 and the mobile token application 2' can be accessed and executed simultaneously as two separate applications.

### Use cases

Figure 1 illustrates a scenario in which it is assumed that the token or shared secret is to be used for online banking; the provisioning for clients other than banks would take a somewhat different form.

Two cases are possible: an existing user, who already has credentials registered with the bank, wishes to start using a mobile token, and a new user is setting up a bank account and wishes to obtain a mobile token.

The first case is the more simple of the two, since it deals with an existing user 4 who already has credentials with the bank 3' and uses them to access the bank online application 3 to make online payments and similar. The same application is used during mobile token provisioning.

The steps the user takes are as follows:
- The user 4 logs on the Bank Online application 3 with a username and static password.
- Following the instructions on the Bank Online application, the user 4 installs the token application 2' on his mobile phone 2.
- An activation code is generated, sent to the mobile application 2' and displayed on the screen, read out or in some other suitable way made known to the user 4 by means of the mobile phone 2.
- The user 4 types in the activation code on an appropriate page in the Bank Online application 3.
- At this point, the user 4 configures the PIN which will henceforth be used to access the token application 2'.
- Token is provisioned and the user sees a confirmation message both on the Bank Online application 3 and on the token application 2'.

The second case refers to a new user 4, who wishes to get a mobile token at the same time as opening a bank account.

The steps the user takes are as follows:
- The user 4 receives a one-time enablement code for accessing Bank Online application 3. This code is only usable for mobile token provisioning, not for the regular use of the application.
   a) The enablement code can be received through various channels, according to the choice of the bank 3' and/or the end user 4:
   b) Delivered to the user's home address by post. In this case the code is valid for a longer period of time, such as five or ten days.
   c) If the user's mobile phone number is registered with the bank, the code can be delivered by SMS. In this case the code is valid for a shorter period of time, e.g. a few minutes.
   d) If the user's e-mail address is registered with the bank, the code can be delivered via e-mail. Similarly to SMS, in this case the code is valid for a shorter period of time.
- The user 4 accesses the Bank Online application 3 and follows the instructions to download the token application 2'. The remainder of the procedure is the same as for existing bank users.

The system architecture and interactions between components of the system will now be described in more detail.

Initially the token provisioning will be described.

The user 4 navigates 11 to a bank online application 3. Here he is instructed how to install and start a mobile token application 2'. He is also instructed to read an activation code from the mobile token application 2' and type it into the bank online application 3 for confirmation.

After the user turns on the mobile token application 2', it requests 12 an activation code from a provisioning server 1.
a. the mobile token application 2' sends a request for an activation code, which includes randomly generated or, if available, hardware specific identifiers such as IMEI, phone number etc.
b. the provisioning server 1 generates an activation code, stores it along with the hardware specific information and returns the activation code to the mobile token application.
   i. The activation code resides on the provisioning server 1 until the completion of provisioning process. If token provisioning is not completed within a set timeframe, such as 5 minutes, the activation code is automatically deleted.
c. the mobile token application 2' makes the activation code available to for the user 4, for instance by displaying it for the user 4 to read.
d. the mobile token application 2' also starts polling the provisioning server 1 for a token seed. The provisioning server 1 responds with a 'seed not available' message until the activation code is verified through the bank online application 3.

The user 4 enters 13 the activation code into the bank online application 3.

The bank online application 3 sends 14 the activation code to the provisioning server 1.
a. The provisioning server 1 verifies the activation code
b. The bank online application 3 starts polling the provisioning server 1 for information whether the token is personalized. The provisioning server 1 responds with 'token not personalized'.

The provisioning server 1 generates 15 a token seed either by itself, or by means of a Hardware Security Module 5 where regulatory, security policy or audit requirements so postulate, in order to assure good randomness of the token seed.
a. The token seed can be encrypted in two different ways, thus generating two token seed encryptions.
   i. A token seed is encrypted using a transport key derived from the hardware specific information and a secret shared between the mobile token application 2' and the provisioning server 1.

The *token seed_{HSI}* will be used to safely send token seed to the mobile token application 2'.
ii. A token seed can also be encrypted with a transport key from an OATH/OCRA validation component 6.

The *token seed*_{*OATH*/*OCRA*} will be used to safely send token seed to the OATH/OCRA validation component.
b. A token serial is obtained from the OATH/OCRA validation component.
c. Both the *token seed_{HSI}* and the *token seedO*_{*ATH*/*OCRA*} together with token serial are saved on the provisioning server 1.

The *token seed_{HSI}* is sent 16 to the mobile token application 2' together with token serial; the mobile token application 2' was polling for token seed the whole time.

The mobile token application 2' sends 17 a request for verification of a one-time password to the provisioning server 1.
a. After receiving the token seed, the mobile token application 2' decrypts it.
b. the mobile token application 2' generates a one-time password
c. the mobile token application 2' sends the one-time password and token serial to the provisioning server 1 for verification.

The provisioning server 1 receives the one time password verification request.
a. The provisioning server 1 sends 18 the verification request (OTP+ token serial+*token* seed_{*OATH*/*OCRA*}+token details) to an OATH/OCRA validation component 6.
b. The OATH/OCRA validation component 6' signals its approval to the provisioning server 1, and the response is forwarded to the mobile token application 2'.
c. The mobile token application 2' is now personalized successfully.

The bank online application 3 polling is answered 19 with a successful token provisioning message containing token serial number. The user is notified that the provisioning process is over.

The bank online application 3 associates 110 the user 4 with the token serial number in the bank's user repository 7.

It is possible to require of the user 4 to establish a shared secret between the provisioning server 1 and the mobile token application 2' in the beginning of the provisioning process, for instance with use of QR code or user entered code. This shared secret would be used to protect the data exchanged between the two parties. Also, later on, during transaction processes this secret could be also used for the same reasons as mentioned above. This secret would be kept on the mobile token application 2' encrypted under a PIN which only the user knows.

Figure 2 is a sequence diagram explaining the protocol made by the interactions between the mobile token application MT 2', provisioning server PS 1 and bank online application BOA 3.

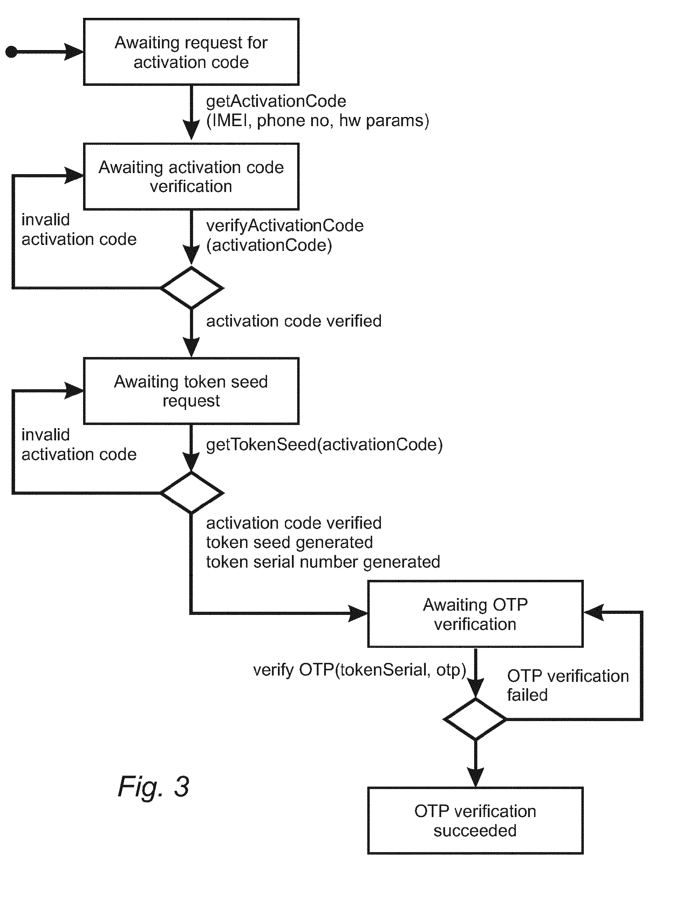

Figure 3 is a state diagram showing the states that the provisioning server goes through when handling a token provisioning.

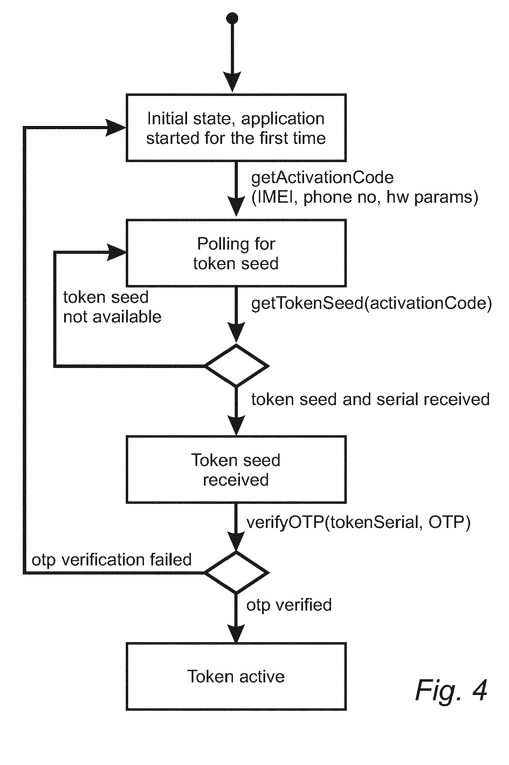

Figure 4 is a state diagram showing the states that the mobile token goes through when handling a token provisioning.

The process of a transaction validation will now be described. This process can refer to the user 4 trying to log in to a Bank Online application 3 or to validate a transaction being made through the same application. The steps the user takes are as follows:
- The user browses to the bank online application 3 and enters their user credentials or requests a transaction to be made.
- The bank online application 3 instructs the user 4 to start the mobile token application 2' on their phone 2.
- The mobile token application 2' receives information regarding the transaction in question and the user 4 is required to confirm the action.

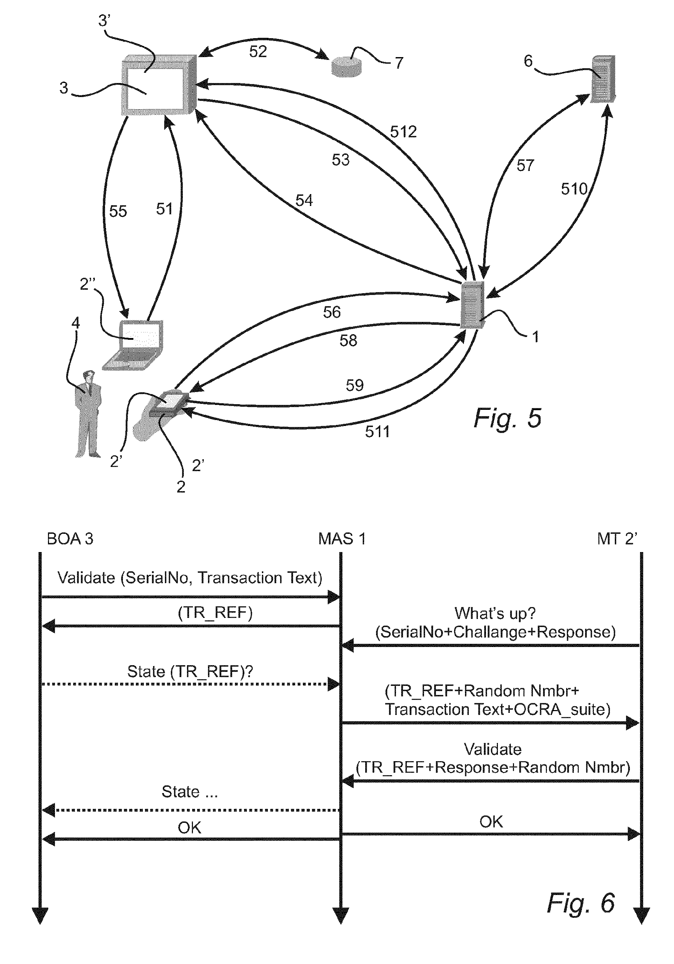

Figure 5 shows the system architecture and interactions between components of the system, where the transaction process is illustrated with all the relevant details.

The user 4 tries to log in 51 to the bank online application 3 or if already logged in tries to perform a transaction.

The bank online application 3 gets the username of the user and maps it 52 to a Serial Number in a local user accounts repository 7.

The bank online application 3 sends 53 a message to the mobile application server 1', which message contains:
a. Serial Number of the user
b. Transaction text - (e.g. "Transfer 1000 euros to account number xxxxxxxxxxxx")

The mobile application server 1' respond 54 with a transaction reference (TRREF) which is a randomly generated reference unique to the transaction. This reference uniquely identifies each transaction and serves as a session id.
a. After this step the bank online application 3 continuously asks the mobile application server 1' of the state of the transaction with a transaction reference TRREF.
b. the mobile application server 1' informs the bank online application 3 on any change of the state.

The bank online application 3 asks 55 the user to start his mobile token application 2'.

The mobile token application 2' when powered asks the user to enter the PIN the user chose during the provisioning of the mobile token application 2'. This PIN is used to protect confidential data held on mobile device. This way there is no sensitive data in clear text present in the device memory or storage.
a. PIN verification is not performed in the mobile token application 2', but in mobile application server 1'. When the PIN is entered, it is used to decrypt the sensitive data.
b. This data, even though it could be wrong, is used in the rest of the transaction verification.
c. This will lead to failure of Transaction verification and a user would have to repeat the process.
d. If the PIN is entered wrongly to many times the mobile token application 2' can delete all data and the user 4 should go through the process of provisioning again. The mobile application server 1' can also block such an instance of the mobile token application 2' from working again until re-provisioned which, in turn, requires proving the user's 4 identity again.
e. After the correct PIN is entered the mobile token application 2' asks 56 the mobile application server 1' if there are pending transactions. This message contains user's Serial Number, a newly generated Challenge and appropriate Response. This step is introduced to mitigate the possibility of an attacker reading the transaction data.

The mobile application server 1' verifies 57 the challenge-response pair with the OATH/OCRA validation component 6. If verification is successful then the transaction reference TRREF and transaction text are sent 58 to the mobile token application 2'.

The mobile token application 2' calculates a RESPONSE and sends 59 it together with received transaction reference TRREF.

The mobile application server 1' verifies 510 the challenge-response pair with the OATH/OCRA validation component 6.

If the OATH/OCRA validation component 6 verifies the Response the mobile application server 1' notifies 511, 512 the mobile token application 2' and the bank online application 3 that the transaction was successful.

It is proposed that the communication between mobile application server 1' and the bank online application 3 and the mobile token application 2' is protected by the use of the TLS protocol.

It is also proposed that if during the provisioning process a shared secret was established between provisioning server 1 and the mobile token application 2', then this could be used to protect exchanged data between those parties.

Figure 6 is a sequence diagram that explains the protocol made by the interactions between the mobile token application MT 2', the mobile application server MAS 1' and the bank online application BOA 3.

In the exemplifying embodiments the use of a provisioning server, mobile application server, an OATH/OCRA validation component and a hardware security module has been shown as separate components, however, it should be understood that both the provisioning server 1 and the mobile application server 1' can include the function of one or both of the OATH/OCRA validation component 6 and the hardware security module 5 and that one and the same server can function as both a provisioning server 1 and a mobile application server 1'. In the claims the first device is described as comprising all of these functions. The skilled person understands that the first device can be realised through one or several servers through which these servers and functions are made available both through internal functions or external services.

In the exemplifying embodiments an online bank has been used to exemplify a service provider, however, it should be understood that the term "service provider" include any kind of provider where protected access to the service is required, such as web- or cloud applications where a safe identification of a user is required, any kind of economical transactions, and access to protected material and corporate networks.

It will be understood that the invention is not restricted to the aforedescribed and illustrated exemplifying embodiments thereof and that modifications can be made within the scope of the invention as defined by the accompanying Claims.

## Claims

1. A method for establishing a shared secret between a first and a second device (1, 2) without any shared trust between said first and second device, for the use of services provided by a service provider (3') to a user (4) of said second device (2), **characterized in**,
a) said user (4) of said second device (2) being identified (11) by said service provider (3),
b) said second device (2) requesting (12) and receiving an activation code from said first device (1),
c) said user (4) of said second device sending (13) said activation code to said service provider (3),
d) said service provider (3) sending (14) said activation code to said first device (1),
e) said first device (1) confirming said activation code and generating and storing said shared secret (15),
f) said first device (1) generating a reference to said shared secret and transferring (16) said reference and shared secret to said second device (2),
g) said first device (1) transferring (19) said reference to said service provider (3), and
h) said service provider (3) storing (110) said reference and associating said reference to said user (4).

2. A method according to claim 1, **characterized in, that** said user is identified by said service provider through a previously established relation.

3. A method according to claim 1, **characterized in, that** said user is identified by said service provider through an out of the band method, such as a personal visit or a registered mail.

4. A method according to any preceding claim, **characterized in, that** unique randomly generated or hardware specific information is included in said request of activation code, and that said information is used to protect the transfer of said shared secret.

5. A method according to any preceding claim, **characterized in, that** said request includes user selected information known by said user, said user selected information being available for detecting unauthorized use of said shared secret.

6. A method according to claim 5, **characterized in, that** said user selected information is stored in said first device.

7. A method according to any preceding claim, **characterized in, that**, before the transferring of said reference to said service provider, said first and second device mutually validate said shared secret.

8. A method according to any preceding claim, **characterized in**, following step b), said second device initiating a periodical poll of said first device for said shared secret, and terminating said poll at the closing of step f).

9. A method according to any preceding claim, **characterized in**, following step d), said service provider initiating a periodical poll of said first device for said reference, and terminating said poll at the closing of step g).

10. A method according to any preceding claim, **characterized in, that** said first device can establish a shared secret with more than one second device.

11. A method according to any preceding claim, **characterized in, that** said second device can establish a shared secret with more than one first device.

12. A method according to any preceding claim, **characterized in, that** said first device can provide the use of established shared secrets to more than one service provider.

13. A method according to any preceding claim, **characterized in, that** said first device and said service provider are two separate physical units or two separate logical units in one and the same physical unit.

14. A system adapted to establish a shared secret between a first and a second device without any shared trust between said first and second device, for the use of services provided by a service provider to a user of said second device, **characterized in**,
a) said second device being adapted to enable said user to be identified by said service provider,
b) said second device being adapted to request and receive an activation code from said first device,
c) said service provider being adapted to receive said activation code from the user of said second device,
d) said service provider being adapted to send said activation code to said first device,
e) said first device being adapted to confirm said activation code and generate and store said shared secret,
f) said first device being adapted to generate a reference to said shared secret and to transfer said reference and shared secret to said second device,
g) said first device being adapted to transfer said reference to said service provider, and
h) said service provider being adapted to store said reference and to associate said reference to said user.

15. A system according to claim 14, **characterized in, that** said service provider is adapted to identify said user through a previously established relation.

16. A system according to claim 14, **characterized in, that** said service provider is adapted to identify said user through an out of the band method, such as a personal visit or a registered mail.

17. A system according to any one of claims 14 to 16, **characterized in, that** said second device is adapted to include randomly generated or unique hardware specific information in said request of activation code, and that said first device is adapted to use said information to protect the transfer of said shared secret.

18. A system according to any one of claims 14 to 17, **characterized in, that** said second device is adapted to include user selected information known by said user in said request, said user selected information being available to said first device for detecting unauthorized use of said shared secret.

19. A system according to claim 18, **characterized in, that** said first device is adapted to store said user selected information.

20. A system according to any one of claims 14 to 19, **characterized in, that** said first and second device are adapted to mutually validate said shared secret before the transferring of said reference to said service provider.

21. A system according to any one of claims 14 to 20, **characterized in, that** following step b) said second device is adapted to initiate a periodical poll of said first device for said shared secret, which poll is terminated at the closing of step f).

22. A system according to any one of claims 14 to 21, **characterized in, that** following step d) said service provider is adapted to initiate a periodical poll of said first device for said reference, which poll is terminated at the closing of step g).

23. A system according to any one of claims 14 to 22, **characterized in, that** said first device is adapted to establish a shared secret with more than one second device.

24. A system according to any one of claims 14 to 23, **characterized in, that** said second device is adapted to establish a shared secret with more than one first device.

25. A system according to any one of claims 14 to 24, **characterized in, that** said first device is adapted to provide the use of established shared secrets to more than one service provider.

26. A system according to any one of claims 14 to 25, **characterized in, that** said first device and said service provider are two separate physical units or two separate logical units in one and the same physical unit.

27. A computer program product comprising computer program code, which, when executed by a device, enables said device to perform the steps of a first device according to any one of claims 1, 4, 5, 6, 7, 8, 10 or 12.

28. A computer program product comprising computer program code, which, when executed by a device, enables said device to perform the steps of a second device according to any one of claim 1, 4, 5, 7 or 11.

29. A computer program product comprising computer program code, which, when executed by a device, enables said device to perform the steps of a service provider according to any one of claim 1, 2, 3 or 8.

30. A computer readable medium **characterized by** carrying computer program code according to any one of claims 27 to 29.

## Patentansprüche

1. Verfahren zum Erstellen eines gemeinsam genutzten Geheimnisses zwischen einer ersten und einer zweiten Vorrichtung (1, 2) ohne irgendein gemeinsam genutztes Vertrauen zwischen der ersten und der zweiten Vorrichtung, zur Verwendung von Diensten, die durch einen Dienstanbieter (3') für einen Anwender (4) der zweiten Vorrichtung (2) bereitgestellt werden, **dadurch gekennzeichnet, dass**
a) der Anwender (4) der zweiten Vorrichtung (2) durch den Dienstanbieter (3) identifiziert (11) wird,
b) die zweite Vorrichtung (2) einen Aktivierungscode von der ersten Vorrichtung (1) anfordert (12) und erhält,
c) der Anwender (4) der zweiten Vorrichtung den Aktivierungscode an den Dienstanbieter (3) sendet (13),
d) der Dienstanbieter (3) den Aktivierungscode an die erste Vorrichtung (1) sendet (14),
e) die erste Vorrichtung (1) den Aktivierungscode bestätigt und das gemeinsam genutzte Geheimnis (15) erzeugt und speichert,
f) die erste Vorrichtung (1) eine Referenz zu dem gemeinsam genutzten Geheimnis erzeugt und die Referenz und das gemeinsam genutzte Geheimnis an die zweite Vorrichtung (2) übermittelt (16),
g) die erste Vorrichtung (1) die Referenz an den Dienstanbieter (3) übermittelt (19), und
h) der Dienstanbieter (3) die Referenz speichert (110) und die Referenz dem Anwender (4) zuordnet.

2. Verfahren nach Anspruch 1 **dadurch gekennzeichnet, dass** der Anwender von dem Dienstanbieter durch eine vorher aufgebaute Beziehung identifiziert wird.

3. Verfahren nach Anspruch 1 **dadurch gekennzeichnet, dass** der Anwender von dem Dienstanbieter durch ein Verfahren außer der Reihe wie beispielsweise einen persönlichen Besuch oder eine registrierte Mail identifiziert wird.

4. Verfahren nach einem der vorhergehenden Ansprüche **dadurch gekennzeichnet, dass** einzigartige zufällig erzeugte oder hardwarespezifische Informationen in der Anforderung des Aktivierungscodes enthalten sind und dass die Informationen dazu verwendet werden, die Übermittlung des gemeinsam genutzten Geheimnisses zu schützen.

5. Verfahren nach einem der vorhergehenden Ansprüche **dadurch gekennzeichnet, dass** die Anforderung anwendergewählte Informationen, die dem Anwender bekannt sind, umfasst, wobei die anwendergewählten Informationen verfügbar sind, um eine unautorisierte Verwendung des gemeinsam genutzten Geheimnisses zu detektieren.

6. Verfahren nach Anspruch 5 **dadurch gekennzeichnet, dass** die anwendergewählten Informationen in der ersten Vorrichtung gespeichert sind.

7. Verfahren nach einem der vorhergehenden Ansprüche **dadurch gekennzeichnet, dass** die erste und die zweite Vorrichtung gegenseitig das gemeinsam genutzte Geheimnis validieren, bevor die Referenz an den Dienstanbieter übermittelt wird.

8. Verfahren nach einem der vorhergehenden Ansprüche **dadurch gekennzeichnet, dass,** nach Schritt b), die zweite Vorrichtung eine periodische Abfrage der ersten Vorrichtung nach dem gemeinsam genutzten Geheimnis initiiert und die Abfrage beim Abschließen des Schrittes f) beendet.

9. Verfahren nach einem der vorhergehenden Ansprüche **dadurch gekennzeichnet, dass,** nach Schritt d), der Dienstanbieter eine periodische Abfrage der ersten Vorrichtung nach der Referenz initiiert und die Abfrage beim Abschließen des Schrittes g) beendet.

10. Verfahren nach einem der vorhergehenden Ansprüche **dadurch gekennzeichnet, dass** die erste Vorrichtung ein gemeinsam genutztes Geheimnis mit mehr als einer zweiten Vorrichtung erstellen kann.

11. Verfahren nach einem der vorhergehenden Ansprüche **dadurch gekennzeichnet, dass** die zweite Vorrichtung ein gemeinsam genutztes Geheimnis mit mehr als einer ersten Vorrichtung erstellen kann.

12. Verfahren nach einem der vorhergehenden Ansprüche **dadurch gekennzeichnet, dass** die erste Vorrichtung die Verwendung von erstellten gemeinsam genutzten Geheimnissen für mehr als einen Dienstanbieter bereitstellen kann.

13. Verfahren nach einem der vorhergehenden Ansprüche **dadurch gekennzeichnet, dass** die erste Vorrichtung und der Dienstanbieter zwei physikalisch getrennte Einheiten oder zwei logisch getrennte Einheiten in ein und derselben physischen Einheit sind.

14. System, das zum Erstellen eines gemeinsam genutzten Geheimnisses zwischen einer ersten und einer zweiten Vorrichtung ohne irgendein gemeinsam genutztes Vertrauen zwischen erster und zweiter Vorrichtung zur Verwendung von Diensten, die durch einen Dienstanbieter für einen Anwender der zweiten Vorrichtung bereitgestellt werden, ausgelegt ist, **dadurch gekennzeichnet, dass**
a) die zweite Vorrichtung dazu ausgelegt ist, zu ermöglichen, dass der Anwender durch den Dienstanbieter identifiziert wird,
b) die zweite Vorrichtung dazu ausgelegt ist, einen Aktivierungscode von der ersten Vorrichtung anzufordern und zu erhalten,
c) der Dienstanbieter dazu ausgelegt ist, den Aktivierungscode von dem Anwender der zweiten Vorrichtung zu erhalten,
d) der Dienstanbieter dazu ausgelegt ist, den Aktivierungscode an die erste Vorrichtung zu senden,
e) die erste Vorrichtung dazu ausgelegt ist, den Aktivierungscode zu bestätigen und das gemeinsam genutzte Geheimnis zu erzeugen und speichern,
f) die erste Vorrichtung dazu ausgelegt ist, eine Referenz zu dem gemeinsam genutzten Geheimnis zu erzeugen und die Referenz und das gemeinsam genutzte Geheimnis an die zweite Vorrichtung zu übermitteln,
g) die erste Vorrichtung dazu ausgelegt ist, die Referenz an den Dienstanbieter zu übermitteln, und
h) der Dienstanbieter dazu ausgelegt ist, die Referenz zu speichern und die Referenz dem Anwender zuzuordnen.

15. System nach Anspruch 14 **dadurch gekennzeichnet, dass** der Dienstanbieter dazu ausgelegt ist, den Anwender durch eine vorher aufgebaute Beziehung zu identifizieren.

16. System nach Anspruch 14 **dadurch gekennzeichnet, dass** der Dienstanbieter dazu ausgelegt ist, den Anwender durch ein Verfahren außer der Reihe wie beispielsweise einen persönlichen Besuch oder eine registrierte Mail zu identifizieren.

17. System nach einem der Ansprüche 14 bis 16 **dadurch gekennzeichnet, dass** die zweite Vorrichtung dazu ausgelegt ist, einzigartige zufällig erzeugte oder hardwarespezifische Informationen in der Anforderung des Aktivierungscodes einzubeziehen, und dass die erste Vorrichtung dazu ausgelegt ist, die Informationen dazu zu verwenden, die Übermittlung des gemeinsam genutzten Geheimnisses zu schützen.

18. System nach einem der Ansprüche 14 bis 17 **dadurch gekennzeichnet, dass die** die zweite Vorrichtung dazu ausgelegt ist, anwendergewählte Informationen, die dem Anwender bekannt sind, in der Anforderung einzubeziehen, wobei die anwendergewählten Informationen für die erste Vorrichtung verfügbar sind, um eine unautorisierte Verwendung des gemeinsam genutzten Geheimnisses zu detektieren.

19. System nach Anspruch 18 **dadurch gekennzeichnet, dass** die erste Vorrichtung dazu ausgelegt ist, die anwendergewählten Informationen zu speichern.

20. System nach einem der Ansprüche 14 bis 19 **dadurch gekennzeichnet, dass** die erste und die zweite Vorrichtung dazu ausgelegt sind, gegenseitig das gemeinsam genutzte Geheimnis zu validieren, bevor die Referenz an den Dienstanbieter übermittelt wird.

21. System nach einem der Ansprüche 14 bis 20 **dadurch gekennzeichnet, dass,** nach dem Schritt b), die zweite Vorrichtung dazu ausgelegt ist, eine periodische Abfrage der ersten Vorrichtung nach dem gemeinsam genutzten Geheimnis zu initiieren und die Abfrage beim Abschließen des Schrittes f) zu beenden.

22. System nach einem der Ansprüche 14 bis 21 **dadurch gekennzeichnet, dass,** nach dem Schritt d), der Dienstanbieter dazu ausgelegt ist, eine periodische Abfrage der ersten Vorrichtung nach der Referenz zu initiieren und die Abfrage beim Abschließen des Schrittes g) zu beenden.

23. System nach einem der Ansprüche 14 bis 22 **dadurch gekennzeichnet, dass** die erste Vorrichtung dazu ausgelegt ist, ein gemeinsam genutztes Geheimnis mit mehr als einer zweiten Vorrichtung zu erstellen.

24. System nach einem der Ansprüche 14 bis 23 **dadurch gekennzeichnet, dass** die zweite Vorrichtung dazu ausgelegt ist, ein gemeinsam genutztes Geheimnis mit mehr als einer ersten Vorrichtung zu erstellen.

25. System nach einem der Ansprüche 14 bis 24 **dadurch gekennzeichnet, dass** die erste Vorrichtung dazu ausgelegt ist, die Verwendung von aufgebauten gemeinsam genutzten Geheimnissen für mehr als einen Dienstanbieter bereitzustellen.

26. System nach einem der Ansprüche 14 bis 25 **dadurch gekennzeichnet, dass** die erste Vorrichtung und der Dienstanbieter zwei physikalisch getrennte Einheiten oder zwei logisch getrennte Einheiten in ein und derselben physischen Einheit sind.

27. Computerprogrammprodukt, das einen Computerprogrammcode umfasst, der, wenn er durch eine Vorrichtung ausgeführt wird, es der Vorrichtung ermöglicht, die Schritte einer ersten Vorrichtung nach einem der Ansprüche 1, 4, 5, 6, 7, 8, 10 oder 12 auszuführen.

28. Computerprogrammprodukt, das einen Computerprogrammcode umfasst, der, wenn er durch eine Vorrichtung ausgeführt wird, es der Vorrichtung ermöglicht, die Schritte einer zweiten Vorrichtung nach einem der Ansprüche 1, 4, 5, 7 oder 11 auszuführen.

29. Computerprogrammprodukt, das einen Computerprogrammcode umfasst, der, wenn er durch eine Vorrichtung ausgeführt wird, es der Vorrichtung ermöglicht, die Schritte eines Dienstanbieters nach einem der Ansprüche 1, 2, 3 oder 8 auszuführen.

30. Computerlesbares Medium, **dadurch gekennzeichnet, dass** es einen Computerprogrammcode nach einem der Ansprüche 27 bis 29 trägt.

## Revendications

1. Procédé pour établir un secret partagé entre un premier et un second dispositif (1, 2) sans confiance partagée entre le premier et le second dispositif pour l'utilisation de services fournis par un fournisseur de service (3') à un utilisateur (4) du second dispositif (2), **caractérisé en ce que** :
(a) l'utilisateur (4) du second dispositif (2) est identifié (11) par le fournisseur de service (3) ;
(b) le second dispositif (2) demande (12) et reçoit un code d'activation du premier dispositif (1) ;
(c) l'utilisateur (4) du second dispositif envoie (13) le code d'activation au fournisseur de service (3) ;
(d) le fournisseur de service (3) envoie (14) le code d'activation au premier dispositif (1) ;
(e) le premier dispositif (1) confirme le code d'activation et génère et stocke le secret partagé (15) ;
(f) le premier dispositif génère une référence vers le secret partagé et transfère (16) la référence et le secret partagé au second dispositif (2) ;
(g) le premier dispositif (1) transfère (19) la référence au fournisseur de service (3) ; et
(h) le fournisseur de service (3) stocke (110) la référence et associe la référence à l'utilisateur (4).

2. Procédé selon la revendication 1, **caractérisé en ce que** l'utilisateur est identifié par le fournisseur de service via une relation préalablement établie.

3. Procédé selon la revendication 1, **caractérisé en ce que** l'utilisateur est identifié par le fournisseur de service selon un procédé hors bande, comme une visite personnelle ou un courrier enregistré.

4. Procédé selon l'une quelconque des revendications précédentes, **caractérisé en ce que** des informations uniques générées de manière aléatoire ou spécifiques à un matériel sont comprises dans la demande du code d'activation, et **en ce que** les informations sont utilisées pour protéger le transfert du secret partagé.

5. Procédé selon l'une quelconque des revendications précédentes, **caractérisé en ce que** la demande comprend des informations choisies par l'utilisateur connues de l'utilisateur, les informations choisies par l'utilisateur étant disponibles pour détecter une utilisation non autorisée du secret partagé.

6. Procédé selon la revendication 5, **caractérisé en ce que** les informations choisies par l'utilisateur sont stockées dans le premier dispositif.

7. Procédé selon l'une quelconque des revendications précédentes, **caractérisé en ce que**, avant le transfert de la référence au fournisseur de service, les premier et second dispositifs valident mutuellement le secret partagé.

8. Procédé selon l'une quelconque des revendications précédentes, **caractérisé en ce que**, après l'étape (b), le second dispositif lance un sondage périodique du premier dispositif concernant le secret partagé, et termine le sondage à la fin de l'étape (f).

9. Procédé selon l'une quelconque des revendications précédentes, **caractérisé en ce que**, après l'étape (d), le fournisseur de service lance un sondage périodique du premier dispositif concernant la référence, et termine le sondage à la fin de l'étape (g).

10. Procédé selon l'une quelconque des revendications précédentes, **caractérisé en ce que** le premier dispositif peut établir un secret partagé avec plusieurs seconds dispositifs.

11. Procédé selon l'une quelconque des revendications précédentes, **caractérisé en ce que** le second dispositif peut établir un secret partagé avec plusieurs premiers dispositifs.

12. Procédé selon l'une quelconque des revendications précédentes, **caractérisé en ce que** le premier dispositif peut fournir l'utilisation de secrets partagés établis à plus d'un fournisseur de service.

13. Procédé selon l'une quelconque des revendications précédentes, **caractérisé en ce que** le premier dispositif et le fournisseur de service sont deux unités physiques distinctes ou deux unités logiques distinctes dans une même unité physique.

14. Système conçu pour établir un secret partagé entre un premier et un second dispositif sans confiance partagée entre le premier et le second dispositif pour l'utilisation de services fournis par un fournisseur de service à un utilisateur du second dispositif, **caractérisé en ce que** :
(a) le second dispositif est conçu pour permettre que l'utilisateur soit identifié par le fournisseur de service ;
(b) le second dispositif est conçu pour demander et recevoir un code d'activation du premier dispositif ;
(c) le fournisseur de service est conçu pour recevoir le code d'activation de l'utilisateur du second dispositif ;
(d) le fournisseur de service est conçu pour envoyer le code d'activation au premier dispositif ;
(e) le premier dispositif est conçu pour confirmer le code d'activation et générer et stocker le secret partagé ;
(f) le premier dispositif est conçu pour générer une référence vers le secret partagé et transférer la référence et le secret partagé vers le second dispositif ;
(g) le premier dispositif est conçu pour transférer la référence vers le fournisseur de service ; et
(h) le fournisseur de service est conçu pour stocker la référence et associer la référence à l'utilisateur.

15. Système selon la revendication 14, **caractérisé en ce que** le fournisseur de service est conçu pour identifier l'utilisateur via une relation préalablement établie.

16. Système selon la revendication 14, **caractérisé en ce que** le fournisseur de service est conçu pour identifier l'utilisateur selon un procédé hors bande, comme une visite personnelle ou un courrier enregistré.

17. Système selon l'une quelconque des revendications 14 à 16, **caractérisé en ce que** le second dispositif est conçu pour comprendre des informations générées de manière aléatoire ou uniques spécifiques à un matériel dans la demande du code d'activation, et **en ce que** le premier dispositif est conçu pour utiliser les informations afin de protéger le transfert du secret partagé.

18. Système selon l'une quelconque des revendications 14 à 17, **caractérisé en ce que** le second dispositif est conçu pour comprendre des informations choisies par l'utilisateur connues de l'utilisateur dans la demande, les informations choisies par l'utilisateur étant disponibles pour le premier dispositif afin de détecter une utilisation non autorisée du secret partagé.

19. Système selon la revendication 18, **caractérisé en ce que** le premier dispositif est conçu pour stocker les informations choisies par l'utilisateur.

20. Système selon l'une quelconque des revendications 14 à 19, **caractérisé en ce que** les premier et second dispositifs sont conçus pour valider mutuellement le secret partagé avant le transfert de la référence au fournisseur de service.

21. Système selon l'une quelconque des revendications 14 à 20, **caractérisé en ce que**, après l'étape (b), le second dispositif est conçu pour lancer un sondage périodique du premier dispositif concernant le secret partagé, le sondage se terminant à la fin de l'étape (f).

22. Système selon l'une quelconque des revendications 14 à 21, **caractérisé en ce que**, après l'étape (d), le fournisseur de service est conçu pour lancer un sondage périodique du premier dispositif concernant la référence, le sondage se terminant à la fin de l'étape (g).

23. Système selon l'une quelconque des revendications 14 à 22, **caractérisé en ce que** le premier dispositif est conçu pour établir un secret partagé avec plusieurs seconds dispositifs.

24. Système selon l'une quelconque des revendications 14 à 23, **caractérisé en ce que** le second dispositif est conçu pour établir un secret partagé avec plusieurs premiers dispositifs.

25. Système selon l'une quelconque des revendications 14 à 24, **caractérisé en ce que** le premier dispositif est conçu pour fournir l'utilisation de secrets partagés établis à plus d'un fournisseur de service.

26. Système selon l'une quelconque des revendications 14 à 25, **caractérisé en ce que** le premier dispositif et le fournisseur de service sont deux unités physiques distinctes ou deux unités logiques distinctes dans une même unité physique.

27. Produit de type programme informatique comprenant un code de programme informatique qui, lorsqu'il est exécuté par un dispositif, permet au dispositif d'exécuter les étapes d'un premier dispositif selon l'une quelconque des revendications 1, 4, 5, 6, 7, 8, 10 ou 12.

28. Produit de type programme informatique comprenant un code de programme informatique qui, lorsqu'il est exécuté par un dispositif, permet au dispositif d'exécuter les étapes d'un second dispositif selon l'une quelconque des revendications 1, 4, 5, 7 ou 11.

29. Produit de type programme informatique comprenant un code de programme informatique qui, lorsqu'il est exécuté par un dispositif, permet au dispositif d'exécuter les étapes d'un fournisseur de service selon l'une quelconque des revendications 1, 2, 3 ou 8.

30. Support lisible par ordinateur, **caractérisé en ce qu'**il comprend un code de programme informatique selon l'une quelconque des revendications 27 à 29.
